(19) **Europäisches Patentamt European Patent Office Office européen des brevets**

(11) **EP 4 611 069 A1**

(12) **EUROPEAN PATENT APPLICATION**
published in accordance with Art. 153(4) EPC

(43) Date of publication:
**03.09.2025 Bulletin 2025/36**

(21) Application number: 24750540.7

(22) Date of filing: **30.01.2024**

(51) International Patent Classification (IPC):
$H01M\ 4/505^{(2010.01)}$    $H01M\ 4/525^{(2010.01)}$
$H01M\ 4/131^{(2010.01)}$    $H01M\ 10/052^{(2010.01)}$
$C01G\ 53/00^{(2025.01)}$    $H01M\ 4/02^{(2006.01)}$

(52) Cooperative Patent Classification (CPC):
C01G 53/00; H01M 4/02; H01M 4/131; H01M 4/505;
H01M 4/525; H01M 10/052; Y02E 60/10

(86) International application number:
**PCT/KR2024/001419**

(87) International publication number:
**WO 2024/162742 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.01.2023 KR 20230011790**

(71) Applicant: **LG CHEM, LTD.**
**Seoul 07336 (KR)**

(72) Inventors:
• **KIM, Jun Gil**
  **Daejeon 34122 (KR)**
• **YOON, Ju Han**
  **Daejeon 34122 (KR)**
• **KIM, Won Tae**
  **Daejeon 34122 (KR)**
• **LIM, Young Geun**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL, PREPARATION METHOD THEREFOR, POSITIVE ELECTRODE COMPRISING SAME, AND LITHIUM SECONDARY BATTERY**

(57) The present invention relates to a positive electrode active material having improved resistance and lifetime characteristics, a method for preparing the same, and a positive electrode and a lithium secondary battery which include the same, and provides a positive electrode active material represented by Formula 1 and formed of polycrystal grains composed of secondary particles in which primary particles are aggregated, wherein a surface portion porosity A defined by Equation 1 is 1% to 30%, a method for preparing the same, and a positive electrode and a lithium secondary battery which include the same.

[FIG. 1]

EP 4 611 069 A1

**Description**

## TECHNICAL FIELD

### Cross-reference to Related Applications

This application claims the benefit of priority from Korean Patent Application No. 10-2023-0011790, filed on January 30, 2023, in the Korean Intellectual Property Office, the disclosure of which is incorporated herein in its entirety by reference.

### Technical Field

The present invention relates to a positive electrode active material having improved resistance properties and lifetime properties, a method for preparing the same, and a positive electrode and a lithium secondary battery which include the same.

## BACKGROUND ART

Demand for secondary batteries as an energy source has been rapidly increased as technology development and demand with respect to mobile devices have increased. Among such secondary batteries, lithium secondary batteries having high energy density and voltage, long cycle life, and low self-discharging rate have been commercialized and widely used.

Lithium transition metal composite oxides have been used as a positive electrode active material of the lithium secondary battery, and in particular, a lithium cobalt composite metal oxide, such as $LiCoO_2$, having a high working voltage and excellent capacity characteristics has been mainly used. However, $LiCoO_2$ has very poor thermal properties due to the destabilization of a crystal structure according to de-lithium, and is also expensive, and thus has a limitation in being used as a power source in a field such as electric vehicles or the like in a large amount.

Lithium manganese composite metal oxides ($LiMnO_2$ or $LiMn_2O_4$), lithium iron phosphate compounds ($LiFePO_4$ and the like), or lithium nickel composite metal oxides ($LiNiO_2$ and the like) have been developed as materials for replacing $LiCoO_2$. Among these materials, research and development of the lithium nickel composite metal oxides, in which a large capacity battery may be easily achieved due to a high reversible capacity of about 250 mAh/g, have been more actively conducted. However, $LiNiO_2$ has poorer thermal stability than $LiCoO_2$ and, when an internal short circuit takes place in a charged state due to an external pressure, a positive electrode active material itself is decomposed to cause rupture and ignition of batteries.

Accordingly, as a method for retaining the excellent reversible capacity of $LiNiO_2$ and improving the low thermal stability thereof, a nickel cobalt manganese-based lithium composite metal oxide, in which a portion of Ni is substituted with Mn and Co or Al (hereinafter, simply referred to as "NCM-based lithium composite transition metal oxide"), has been developed.

However, due to the recent increase in the price of cobalt (Co), a lithium-rich (Li-rich) NCM-based positive electrode active material capable of meeting high capacity while containing a relatively low amount of the cobalt (Co) or containing no cobalt (Co) has been developed.

Meanwhile, the cobalt-free, Li, and Mn-rich positive electrode active materials requires a great deal of Li in a process of firing precursors and lithium raw materials to obtain the positive electrode active materials compared to general NCM-based positive electrode active materials, and thus requires a positive electrode active material precursor having a high specific surface area that may be in contact with Li, and have degradation in battery characteristics when pores are not present or pores are present only inside the precursor.

Accordingly, there is a demand for the development of a positive electrode active material having pores evenly distributed inside and on a surface thereof and thus exhibiting excellent battery characteristics.

[Related Art Document]

[Patent Document]

(Patent Document 1) CN 110112388 A (2019. 08. 09.)

## DISCLOSURE OF THE INVENTION

## TECHNICAL PROBLEM

In order to address the above-described tasks, an aspect of the present invention provides a positive electrode active material in which porosity is defined on a surface portion thereof, in Li and Mn-rich positive electrode active materials.

Another aspect of the present invention provides a method for preparing the positive electrode active material.

Another aspect of the present invention provides a positive electrode and a lithium secondary battery, which include the positive electrode active material.

## TECHNICAL SOLUTION

To solve the tasks, the present invention provides a positive electrode active material, a method for preparing the same, and a positive electrode and a lithium secondary battery, which include the same.

(1) According to an aspect of the present invention, provided is a positive electrode active material represented by Formula 1 below and formed of polycrystal grains composed of secondary particles in which primary particles are aggregated, wherein a surface portion porosity A defined by Equation 1 below is 1% to 30%.

[Formula 1]     $x[LiMn_pNi_{(1-p-q-r)}Co_qM^1_rO_2] \cdot (1-x)[Li_2Mn_sM^2_{(1-s)}O_3]$

in Formula 1 above,

$M^1$ and $M^2$ are each independently one selected from Zr, Al, Re, V, Cr, Fe, Ga, Si, B, Ru, Ti, Nb, Mo, Mg, W, Na, and Pt, and
$0.500 < x < 0.800$, $0.450 < p < 0.650$, $0 \leq q \leq 0.025$, $0 \leq r \leq 0.100$, and $0.900 \leq s \leq 1.000$ are satisfied,

$$[\text{Equation 1}]$$

$$A(\%) = [P_A / S_A] \times 100$$

in Equation 1 above,
$P_A$ indicates an area ratio of pores in a surface portion on a cross-section of the positive electrode active material,
$S_A$ is an area ratio of a surface portion on a cross-section of the positive electrode active material,
an inner portion of a cross-section of the positive electrode active material is a region formed by connecting points at the 1/2 of the distance from a center on the cross-section of the positive electrode active material to an outermost surface on the cross-section of the positive electrode active material, and
the surface portion on the cross-section of the positive electrode active material is a region excluding the inner portion.

(2) The present invention provides the positive electrode active material according to (1) above, wherein the surface portion porosity A is 2% to 20%.
(3) The present invention provides the positive electrode active material according to (1) or (2) above, wherein the positive electrode active material includes no Co.
(4) The present invention provides the positive electrode active material according to any one of (1) to (3) above, wherein the positive electrode active material is represented by Formula 1-1 below.

[Formula 1-1]     $x[LiMn_pNi_{(1-p-r)}M^1_rO_2] \cdot (1-x) [Li_2Mn_sM^2_{(1-s)}O_3]$

in Formula 1-1 above,
$M^1$ and $M^2$ are each independently one selected from Zr, Al, Re, V, Cr, Fe, Ga, Si, B, Ru, Ti, Nb, Mo, Mg, W, Na, and Pt, and $0.55 < x < 0.70$, $0.52 < p < 0.58$, $0 \leq r < 0.10$, and $0.90 \leq s \leq 1.00$ are satisfied.
(5) The present invention provides the positive electrode active material according to any one of (1) to (4) above, wherein the positive electrode active material has an average particle diameter $D_{50}$ of 3 $\mu$m to 12 $\mu$m.
(6) According to another aspect of the present invention, provided is a method for preparing a positive electrode active material according to any one of (1) to (5) above represented by Formula 1 below, the method including mixing and firing a transition metal hydroxide and a lithium raw material, wherein the transition metal hydroxide is prepared through the steps of: forming an inert atmosphere with a pH of 12 to 13 inside a reactor (S1), injecting nitrogen and air into the reactor at a volume ratio of 99.5:0.5 to 85.0:15.0 to form an active atmosphere, adding a transition metal solution containing Ni and Mn, and a basic solution, and subjecting the mixture to a coprecipitation reaction in a condition of a pH of 10 to 11 (S2).

[Formula 1]          $x[LiMn_pNi_{(1-p-q-r)}Co_qM^1_rO_2] \cdot (1-x) [Li_2Mn_sM^2_{(1-s)}O_3]$

in Formula 1 above,

$M^1$ and $M^2$ are each independently one selected from Zr, Al, Re, V, Cr, Fe, Ga, Si, B, Ru, Ti, Nb, Mo, Mg, W, Na, and Pt, and $0.500<x<0.800$, $0.450<p<0.650$, $0 \leq q \leq 0.025$, $0 \leq r \leq 0.100$, and $0.900 \leq s \leq 1.000$ are satisfied.

(7) The present invention provides the method according to (6) above, wherein the step (S1) is performed by adding and mixing a solvent and a basic solution into a reactor to form an atmosphere with a pH of 12 to 13, and then introducing an inert gas.

(8) The present invention provides the method according to (6) or (7) above, wherein in the step (S2), the coprecipitation reaction is performed by adding the basic solution so that the pH in the reactor reaches 10 to 11 within 1 to 2 hours after adding the transition metal solution into the reactor to initiate a reaction, and continuing the reaction for 20 to 50 hours while maintaining the pH of 10 to 11.

(9) The present invention provides the method according to any one of (6) to (8) above, wherein the transition metal hydroxide includes Mn in an amount of 50 mol% or greater in transition metals.

(10) The present invention provides the method according to any one of (6) to (9) above, wherein the transition metal hydroxide includes no Co.

(11) The present invention provides the method according to any one of (6) to (10) above, wherein the transition metal hydroxide and the lithium raw material are mixed such that the transition metal hydroxide and a lithium element in the lithium raw material are present at a molar ratio of 1:1.2 to 1:1.6.

(12) According to another aspect of the present invention, provided is a positive electrode including a current collector, and a positive electrode active material layer provided on at least one surface of the current collector, wherein the positive electrode active material layer includes the positive electrode active material according to any one of (1) to (5) above.

(13) According to another aspect of the present invention, provided is a lithium secondary battery including the positive electrode according to (12) above, a negative electrode, a separator interposed between the positive electrode and the negative electrode, and an electrolyte.

## ADVANTAGEOUS EFFECTS

A positive electrode active material according to the present invention has pores evenly distributed both in an inner portion and in a surface portion, allowing lithium ions to easily move upon charge/discharge even as Li and Mn-rich positive electrode active materials, resulting in reduced resistance and excellent capacity and lifetime characteristics.

A method for preparing a positive electrode active material according to the present invention involves coprecipitating a transition metal in an active atmosphere adjusted to a weak oxygen atmosphere to prepare a transition metal hydroxide, and mixing and firing the transition metal hydroxide and lithium raw materials to prepare a positive electrode active material having surface portion pore characteristics in specific conditions.

In addition, a positive electrode and a lithium secondary battery according to the present invention include the positive electrode active material described above, and thus have excellent capacity and lifetime characteristics.

## BRIEF DESCRIPTION OF THE DRAWINGS

The following drawings attached herein illustrate preferred examples of the present invention by example, and serve to enable technical concepts of the present invention to be further understood together with detailed description of the invention given below, and therefore the present invention should not be interpreted only with matters in such drawings.

FIG. 1 is an SEM image (at a magnification of 20 K) of a positive electrode active material prepared in Example 1;

FIG. 2 is an SEM image (at a magnification of 20 K) of a positive electrode active material prepared in Example 2;

FIG. 3 is an SEM image (at a magnification of 20 K) of a positive electrode active material of Example 3;

FIG. 4 is an SEM image (at a magnification of 20 K) of a positive electrode active material of Comparative Example 1;

FIG. 5 is an SEM image (at a magnification of 20 K) of a positive electrode active material of Comparative Example 2;

FIG. 6 is an SEM image (at a magnification of 20 K) of a positive electrode active material of Comparative Example 3; and

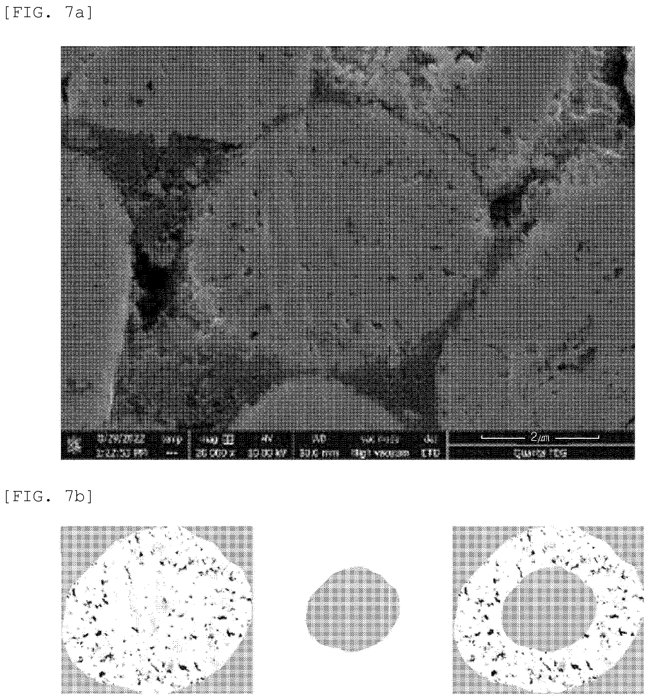

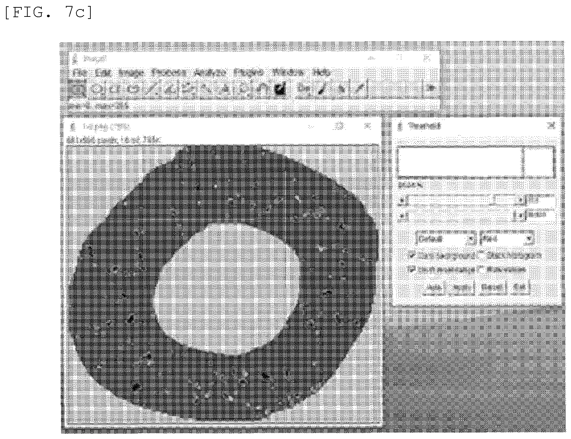

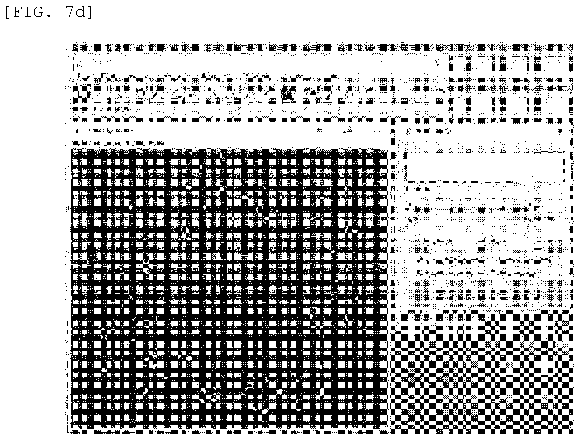

FIG. 7 is an image showing a process of measuring surface portion porosity of a positive electrode active material according to an embodiment of the present invention, and an image showing (a) a process of selecting particles on a cross-section, distinguishing between a particle outline and an unnecessary background, and removing the background, (b) a process of distinguishing between an inner portion and a surface portion of the particles, (c) and (d) processes of using Image J to obtain an area ratio (A1) occupied by the surface portion excluding pores with respect to the total area of the image and an area ratio (A2) excluding surface portion pores with respect to the total area of the image.

## MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Definition of Terms

Herein, the term 'polycrystal grains' indicate particles having a form in which a crystal lattice structure is gathered in an irregular orientation throughout the particle, and may be composed of secondary particles in which primary particles are aggregated. Herein, the secondary particles have a structure in which small-sized primary particles are physically and/or chemically aggregated to form relatively large particles, which is usually a particle structure in contrast to the primary particles.

Herein, the term 'porosity (%)' indicates the percent of pore space in particles, and represents the ratio of an area occupied by pores with respect to a reference area.

Measurement method

Herein, using SEM (Quanta FEG 250, PHILIPS), a cross-section of a positive electrode active material was obtained in the following conditions, particles on the cross-section were selected ((a) of FIG. 7) to get a particle outline and remove unnecessary background portions, and an inner portion and a surface portion were distinguished ((b) of FIG. 7) to measure surface portion porosity A using an image processing program, ImageJ. In this case, the inner portion on the cross-section is a region formed by connecting points at the 1/2 of the distance from a center on the cross-section of the positive electrode active material to an outermost surface on the cross-section of the positive electrode active material (see (b) of FIG. 7).

High voltage: 10,000 kV
Chamber pressure: $9.0 \times 10^{-5}$ mbar
Gun pressure: $6.85 \times 10^{-10}$ mbar
Emission current: 165 $\mu$A
WD: 10 mm
Beam spot size: 3.0
Stage bias: 4000 V

Using ImageJ, an area ratio (A1) occupied by the surface portion excluding pores with respect to the total area of the image and an area ratio (A2) excluding surface portion pores with respect to the total area of the image were obtained ((c) and (d) of FIG. 7), the area ratio (A2) excluding surface portion pores from the total area (100) was subtracted (100-A2) to obtain an area ratio ($P_A$) of the pores in the surface portion, and the area ratio (A1) occupied by the surface portion and the area ratio ($P_A$) of the pores in the surface portion were added to calculate an area ratio ($S_A$) of the surface portion.

Thereafter, the surface portion porosity was calculated through Equation 1 below.

$$[\text{Equation 1}]$$

$$A(\%) = [P_A / S_A] \times 100$$

In Equation 1 above,

$P_A$ indicates an area ratio of pores in a surface portion on a cross-section of the positive electrode active material, $S_A$ indicates an area ratio of a surface portion on a cross-section of the positive electrode active material, an inner portion of a cross-section of the positive electrode active material is a region formed by connecting points at the 1/2 of the distance from a center on the cross-section of the positive electrode active material to an outermost surface on the cross-section of the positive electrode active material, and the surface portion on the cross-section of the positive electrode active material is a region excluding the inner portion.

As another example, in terms of obtaining values with higher accuracy, using SEM (Quanta FEG 250, PHILIPS), a cross-section of a positive electrode active material may be obtained, 30 particles may be selected from the cross section, and through the above-described process, an area ratio $P_{Ai}$ (where i is an integer of 1 to 30) of the pores in the surface portion and an area ratio $S_{Ai}$ (where i is an integer of 1 to 30) of the surface portion for each of the 30 particles may be obtained, and the surface portion porosity $A_i$ (where i is an integer of 1 to 30) for the 30 particles may be obtained through Equation 1 above, and then the average value thereof may be provided as the surface portion porosity A' (see Equation 2 below).

$$[Equation\ 2]$$

$$\text{Surface portion porosity}(A') = \frac{1}{n}\sum_{i=1}^{n}\frac{100P_{Ai}}{S_{Ai}}$$

(where, n is an integer of 30)

Meanwhile, the standard deviation of surface portion porosity A and surface portion porosity A' is 2 or less.

Hereinafter, the present invention will be described in detail.

### Positive electrode active material

The present invention provides a Li and Mn-rich positive electrode active material having pores evenly distributed in an inner portion and in a surface portion, and in particular, having specific pore characteristics on the surface portion and thus facilitating the movement of lithium ions upon charge/discharge.

The positive electrode active material according to an embodiment of the present invention is represented by Formula 1 below and formed of polycrystal grains composed of secondary particles in which primary particles are aggregated, wherein a surface portion porosity A defined by Equation 1 below is 1% to 30%.

[Formula 1]     $x[LiMn_pNi_{(1-p-q-r)}Co_qM^1{}_rO_2]\cdot(1-x)[Li_2Mn_sM^2{}_{(1-s)}O_3]$

In Formula 1 above,
$M^1$ and $M^2$ are each independently one selected from Zr, Al, Re, V, Cr, Fe, Ga, Si, B, Ru, Ti, Nb, Mo, Mg, W, Na, and Pt, and $0.500<x<0.800$, $0.450<p<0.650$, $0\leq q\leq0.025$, $0\leq r\leq0.100$, and $0.900\leq s\leq1.000$ are satisfied.

$$[Equation\ 1]$$

$$A(\%)=[P_A/S_A]\times100$$

In Equation 1 above,

$P_A$ indicates an area ratio of pores in a surface portion on a cross-section of the positive electrode active material, $S_A$ is an area ratio of a surface portion on a cross-section of the positive electrode active material, and an inner portion of a cross-section of the positive electrode active material is a region formed by connecting points at the 1/2 of the distance from a center on the cross-section of the positive electrode active material to an outermost surface on the cross-section of the positive electrode active material, and the surface portion on the cross-section of the positive electrode active material is a region excluding the inner portion.

Specifically, the positive electrode active material according to an embodiment of the present invention may have a surface portion porosity A of 2% to 20%.

A typical NCM-based positive electrode active material is prepared from a precursor having a single-phase rhombohedral lattice structure and has a structure in which a transition metal layer and a Li layer are repeated.

On the other hand, the Li and Mn-rich positive electrode active material which is cobalt-free or has a small amount of cobalt may be prepared from a Mn-rich precursor having a crystal structure of two phases, monoclinic lattice and rhombohedral lattice, has a structure in which Li atoms are further included in transition metals layer, in addition to a repeated structure of the transition metal layer and a Li layer, and accordingly, requires a great deal of Li when obtaining a positive electrode active material by mixing and firing a precursor and a lithium raw material, compared to general NCM-based positive electrode active materials, and thus requires a positive electrode active material precursor having a high specific surface area that may be in contact with Li, and in this case, when pores are not evenly distributed in an inner portion and a surface portion of the precursor and are present only in the inner portion, the prepared positive electrode active material has no pores in the surface portion thereof, causing disruption in movement of lithium ions upon charge/discharge, resulting in poor battery characteristics.

However, the positive electrode active material according to the present invention is a Li and Mn-rich (overlithiated and manganese-based) positive electrode active material and has a porosity defined in specific conditions in the surface portion, and may thus facilitate the movement of lithium ions upon charge/discharge, resulting in excellent capacity and lifetime characteristics.

Meanwhile, the surface portion porosity A may be an average value of all or a portion of the polycrystal grains forming the positive electrode active material, or may be a value satisfied by 70% or more of the polycrystal grains forming the positive electrode active material.

As an example, 30 polycrystal grains forming the positive electrode active material may be randomly selected, surface portion porosity may be obtained from the cross-section of each grain, and the range of the surface portion porosity A may be defined as the average value thereof.

As another example, surface portion porosity of each polycrystal grain forming the positive electrode active material may be obtained, and the range of the surface portion porosity A may be defined as the range satisfied by 70% or more of the polycrystal grains.

The positive electrode active material according to an embodiment of the present invention is a lithium composite transition metal oxide containing Ni and Mn, and may contain Mn in an amount of 50 mol% or greater with respect to transition metals excluding lithium. In this case, it may be easy to obtain a high capacity of the positive electrode active material.

As another example, in terms of balanced excellent initial charge/discharge capacity, the content of Mn in the transition metals may be 55 mol% to 80 mol%, specifically, 60 mol% to 80 mol%.

As another example, the positive electrode active material may include no Co.

More specifically, the positive electrode active material according to an embodiment of the present invention may be represented by Formula 1 below.

[Formula 1] $\quad\quad x[LiMn_pNi_{(1-p-q-r)}Co_qM^1_rO_2]\cdot(1-x)[Li_2Mn_sM^2_{(1-s)}O_3]$

In Formula 1 above,
$M^1$ and $M^2$ are each independently one selected from Zr, Al, Re, V, Cr, Fe, Ga, Si, B, Ru, Ti, Nb, Mo, Mg, W, Na, and Pt, and $0.500 < x < 0.800$, $0.450 < p < 0.650$, $0 \leq q \leq 0.025$, $0 \leq r \leq 0.100$, and $0.900 \leq s \leq 1.000$ are satisfied.

Specifically, in the positive electrode active material, Li may be included in an amount corresponding to (2-x), and specifically, the (2-x) may be 1.10 to 1.30 or 1.13 to 1.21. When the (2-x) is within the above range, excellent initial capacity may be achieved without concerns over difficulty forming an overlithiated manganese phase structure due to the generation of secondary phases and a decrease in capacity thereby, and an increase in gas generation due to an increase in lithium by-products and a decrease in discharge capacity thereby.

In addition, in the positive electrode active material, Mn may be included in an amount corresponding to [xp+(1-x)s], and when the [xp+(1-x)s] is within the above range, charging capacity may be excellent.

In addition, in the positive electrode active material, Ni may be included in an amount corresponding to x(1-p-q-r), and when the x(1-p-q-r) is within the above range, charging capacity may be excellent.

In addition, in the positive electrode active material, $M^1$ and $M^2$ may each be a doping element included in a crystal structure of the positive electrode active material, and may be included in an amount corresponding to xr+(1-x) (1-s), and $M^1$ and $M^2$ may be the same or may be different.

More specifically, the positive electrode active material may be represented by Formula 1-1 below.

[Formula 1-1] $\quad\quad x[LiMn_pNi_{(1-p-r)}M^1_rO_2]\cdot(1-x)[Li_2Mn_sM^2_{(1-s)}O_3]$

In Formula 1-1 above,

$M^1$ and $M^2$ are each independently one selected from Zr, Al, Re, V, Cr, Fe, Ga, Si, B, Ru, Ti, Nb, Mo, Mg, W, Na, and Pt, and
$0.55 < x < 0.70$, $0.52 < p < 0.58$, $0 \leq r \leq 0.10$, and $0.90 \leq s \leq 1.00$ are satisfied.

As another example, the positive electrode active material may have an average particle diameter $D_{50}$ of 3 μm to

12 µm, specifically 5 µm to 10 µm or 6 µm to 8 µm.

In addition, the positive electrode active material may have a total porosity of 1% to 30%, and a difference between an inner portion porosity and a surface portion porosity of 1% to 30%, specifically, a total porosity of 5% to 20%, and a difference between an inner portion porosity and a surface portion porosity of 7% to 20%, and the inner portion porosity may be greater than the surface portion porosity. In this case, pores are evenly distributed throughout the positive electrode active material, and thus lithium movement may be further facilitated upon charge/discharge, resulting in better battery characteristics.

## METHOD OF PREPARING POSITIVE ELECTRODE ACTIVE MATERIAL

The present invention provides a method for preparing a positive electrode active material, which is capable of preparing the positive electrode active material.

The method for preparing a positive electrode active material represented by Formula 1 above according to an embodiment of the present invention includes mixing and firing a transition metal hydroxide and a lithium raw material, and in this case, the transition metal hydroxide is prepared through the steps of: forming an inert atmosphere with a pH of 12 to 13 inside a reactor (S1), injecting nitrogen and air into the reactor at a volume ratio of 99.5:0.5 to 85.0:15.0 to form an active atmosphere, adding a transition metal solution containing Ni and Mn, and a basic solution, and subjecting the mixture to a coprecipitation reaction in a condition of a pH of 10 to 11 (S2).

The lithium raw material may be lithium-containing carbonate (e.g., lithium carbonate), hydrate (e.g., lithium hydroxide hydrate ($LiOH \cdot H_2O$) and the like), hydroxide (e.g., lithium hydroxide and the like), nitrate (e.g., lithium nitrate ($LiNO_3$) and the like), and chloride (e.g., lithium chloride (LiCl) and the like), and any one thereof or a mixture of two or more thereof may be used.

Meanwhile, the mixing of a transition metal hydroxide and a lithium-containing raw material may be performed through solid state mixing such as jet milling, and the mixing ratio of the transition metal hydroxide, which is a positive electrode active material precursor, and the lithium-containing raw material may be determined to be in a range satisfying the mole fraction of each component in a positive electrode active material to be finally prepared. More specifically, the transition metal hydroxide and the lithium raw material may be mixed such that the transition metal hydroxide and an lithium element in the lithium raw material are present at a molar ratio of 1:1.2 to 1:1.6.

Meanwhile, although not required, during the mixing, in addition to the transition metal hydroxide and the lithium raw material, raw materials to dope a portion of a transition metal of the positive electrode active material and/or oxygen may be further included. For example, during the mixing, the M-containing raw material described above and/or an X-containing raw material which will be described later may be further mixed. In this case, the X-containing raw material may be, for example, $Na_3PO_4$, $K_3PO_4$, $Mg_3(PO_4)_2$, $AlF_3$, $NH_4F$, LiF, and the like, but is not limited thereto. When a portion of oxygen is replaced by the X element as above, oxygen desorption and reaction with an electrolyte solution upon charge/discharge of a secondary battery may be prevented.

In addition, the firing may be performed at 750 °C to 1,050 °C, specifically 850 °C to 950 °C, and may be performed for 5 to 30 hours, specifically 8 to 15 hours, but the temperature and the duration of the firing are not limited thereto.

Meanwhile, the transition metal hydroxide may be prepared through a method including the steps of: forming an inert atmosphere with a pH of 12 to 13 inside a reactor (S1), injecting nitrogen and air into the reactor at a volume ratio of 99.5:0.5 to 85.0:15.0 to form an active atmosphere, adding a transition metal solution containing Ni and Mn, and a basic solution, and subjecting the mixture to a coprecipitation reaction in a condition of a pH of 10 to 11 (S2).

Hereinafter, the method for preparing the transition metal hydroxide according to the present invention will be described in detail step by step.

*Step (S1)*

The step (S1) is a step of forming an inert atmosphere and providing specific pH conditions inside a reactor before a coprecipitation reaction, and may be performed by adding a solvent and a basic solution into the reactor and mixing the mixture to form an atmosphere of a pH of 12 to 13, and introducing an inert gas.

The solvent may be a polar solvent commonly used in the art, and may be, for example, water, alcohol, or a mixture thereof.

The inert gas is not particularly limited as long as it is an inert gas commonly used in the art, and may be, for example, any one or more selected from nitrogen, argon, helium, and neon, and may specifically be nitrogen.

The basic solution is a precipitant and serves to regulate the pH in the reactor, and may be a hydroxide of an alkali metal or alkaline earth metal such as NaOH, KOH, or $Ca(OH)_2$, a hydrate thereof, or a combination thereof.

As another example, the basic solution may be used, for example, in the form of an aqueous solution, and in this case, water or a mixture of water and an organic solvent (such as alcohol) uniformly mixable with water may be used as the solvent.

*Step (S2)*

The step (S2) is a step for coprecipitating a transition metal to prepare a transition metal hydroxide, and may be performed by forming an active atmosphere inside the reactor again, adding a transition metal solution and a basic solution, and performing a coprecipitation reaction at a pH of 10 to 11.

Specifically, the active atmosphere may be provided by adding inert gas and air in the reactor at a volume ratio of 99.5:0.5 to 85.0:15.0 to form a weak oxygen atmosphere. In this case, the inert gas may be as described above, and may specifically be nitrogen.

The preparation method according to the present invention is performed by forming an active atmosphere of weak oxygen in an inert atmosphere inside the reactor upon the coprecipitation reaction to form and grow narrow and short needle-shaped primary particles, and accordingly, pores may be uniformly formed up to the surface portion to obtain transition metals hydroxide having a large specific surface area. In addition, as a result, the positive electrode active material in which pores are distributed up to the surface portion is obtainable by mixing the transition metal hydroxide having the above characteristics with a lithium raw material and firing the mixture, and the positive electrode active material, as a overlithiated nickel manganese-based positive electrode active material, facilitates lithium ion movement upon charge/discharge, thereby having reduced resistance and excellent capacity and lifetime characteristics.

In addition, the coprecipitation reaction may be performed by adding the basic solution so that the pH in the reactor reaches 10 to 11 within 1 to 2 hours after adding the transition metal solution into the reactor to initiate a reaction, and continuing the reaction for 20 to 50 hours while maintaining the pH of 10 to 11.

In addition, the coprecipitation reaction may be performed under stirring at a temperature of 40 °C to 60 °C, and the stirring rate is not particularly limited, but the stirring may be performed at 100 rpm to 1,000 rpm to facilitate increasing the reaction rate.

The transition metal solution may be prepared by adding a transition metal raw material to a solvent, specifically, water or a solvent mixture of water and an organic solvent (e.g., alcohol, and the like) uniformly mixable with water or by mixing an aqueous solution of a transition metal raw material.

The transition metal raw material may be transition metal sulfate, acetate, nitrate, halide, sulfide, hydroxide, oxide, or oxyhydroxide.

As a specific example, the Ni raw material may be, for example, nickel-containing acetate, nitrate, sulfate, halide, sulfide, hydroxide, oxide, or oxyhydroxide, more specifically, $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4 \cdot 6H_2O$, nickel salt of fatty acid, nickel halide, or a combination thereof, but is not limited thereto.

In addition, the Mn raw material may be, for example, manganese-containing acetate, nitrate, sulfate, halide, sulfide, hydroxide, oxide, or oxyhydroxide, more specifically, a manganese oxide such as $Mn_2O_3$, $MnO_2$, and $Mn_3O_4$; a manganese salt such as $MnCO_3$, $Mn(NO_3)_2$, $MnSO_4$, manganese acetate, manganese dicarboxylate, manganese citrate, or manganese salt of fatty acid; manganese oxyhydroxide, manganese chloride, or a combination thereof, but is not limited thereto.

As another example, the transition metal solution may further include at least one selected from Zr, Al, Re, V, Co, Cr, Fe, Ga, Si, B, Ru, Ti, Nb, Mo, Mg, W, Na, and Pt, and in this case, the transition metal solution may further include a raw material containing Zr, Al, Re, V, Co, Cr, Fe, Ga, Si, B, Ru, Ti, Nb, Mo, Mg, W, Na, or Pt, and the raw material may be acetate, nitrate, sulfate, halide, sulfide, hydroxide, oxide, or oxyhydroxide, which contain each of the above metals.

In addition, the transition metal solution may include Mn in an amount of 50 mol% or greater with respect to the transition metals in the solution.

As another example, the transition metal solution includes no Co.

The method for preparing a positive electrode active material according to an embodiment of the present invention may further include washing and drying to remove lithium by-products after the firing. The washing may be performed, for example, by adding the prepared positive electrode active material to ultrapure water and stirring the mixture. In this case, the washing temperature may be 20 °C or lower, specifically 10 °C to 20 °C, and the washing may take about 10 minutes to 1 hour. When the washing temperature and time satisfy the above range, lithium by-products may be effectively removed.

**Positive electrode and Secondary battery**

The present invention provides a positive electrode including the positive electrode active material described above, and a lithium secondary battery including the positive electrode.

The positive electrode according to an embodiment of the present invention includes a positive electrode current collector and a positive electrode active material layer formed on the positive electrode current collector, and in this case, the positive electrode active material layer includes the positive electrode active material.

The positive electrode may be prepared according to a typical method of preparing a positive electrode, except that the positive electrode active material described above is used. For example, the positive electrode may be prepared by dissolving or dispersing components constituting a positive electrode active material layer, such as a positive electrode active material, a conductive material, and/or a binder in a solvent to prepare a positive electrode material mixture, applying the positive electrode material mixture onto at least one surface of a positive electrode current collector, followed by drying and roll pressing, or may be prepared by casting the positive electrode material mixture on a separate support and then laminating a film separated from the support on the positive electrode current collector.

In this case, the positive electrode current collector is not particularly limited as long as it has conductivity without causing chemical changes in batteries. For example, stainless steel, aluminum, nickel, titanium, baked carbon, or aluminum or stainless steel that is surface-treated with one of carbon, nickel, titanium, silver, and the like may be used. In addition, the positive electrode current collector may typically have a thickness of 3 $\mu$m to 500 $\mu$m, and fine irregularities may be formed on a surface of the current collector to improve the adhesion of a positive electrode active material. For example, the positive electrode current collector may be used in various forms such as a film, a sheet, a foil, a net, a porous body, a foam body, and a non-woven fabric body.

The positive electrode active material layer containing the positive electrode active material according to the present invention and optionally further containing at least one of a conductive material and a binder is positioned on at least one surface of the current collector.

The positive electrode active material may be included in an amount of 80 wt% to 99 wt%, more specifically 85 wt% to 98 wt% with respect to the total weight of the positive electrode active material layer. When included in the above amount range, the positive electrode active material may exhibit excellent capacity properties.

The conductive material is used to impart conductivity to an electrode, and any conductive material may be used without particular limitation as long as it has electron conductivity without causing chemical changes in batteries to be constituted. Specific examples thereof may include graphite such as natural graphite or artificial graphite; a carbon-based material such as carbon black, acetylene black, Ketjen black, channel black, furnace black, lamp black, thermal black, and carbon fibers; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 1 wt% to 30 wt% with respect to the total weight of the positive electrode active material layer.

In addition, the binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber (SBR), fluorine rubber, or various copolymers thereof, and any one thereof or a mixture of two or more thereof may be used. The binder may be included in an amount of 1 wt% to 30 wt% with respect to the total weight of the positive electrode active material layer.

Meanwhile, the solvent used in the preparation of a positive electrode material mixture may be a solvent commonly used in the art, and for example, dimethyl sulfoxide (DMSO), isopropyl alcohol, N-methylpyrrolidone (NMP), acetone, water, or the like may be used alone or in combination as the solvent. The solvent may be used in an amount suitably adjusted in consideration of application thickness of a slurry, production yield, viscosity, and the like.

In addition, the lithium secondary battery according to the present invention includes a positive electrode, a negative electrode positioned opposite to the positive electrode, a separator interposed between the positive electrode and the negative electrode, and an electrolyte, and in this case, the positive electrode is the positive electrode according to the present invention described above.

Meanwhile, the lithium secondary battery may optionally further include a battery case for accommodating an electrode assembly composed of the positive electrode, the negative electrode, and the separator, and a sealing member for sealing the battery case.

In the lithium secondary battery, the negative electrode includes a negative electrode current collector and a negative electrode active material layer positioned on at least one side of the negative electrode current collector.

The negative electrode may be prepared according to a typical method of preparing a negative electrode, which is generally known in the art. For example, the negative electrode may be prepared by dissolving or dispersing components constituting a negative electrode active material layer, such as a negative electrode active material, a conductive material, and/or a binder in a solvent to prepare a negative electrode material mixture, applying the negative material mixture onto at least one surface of a negative electrode current collector, followed by drying and roll pressing, or may be prepared by casting the negative electrode material mixture on a separate support and then laminating a film separated from the support on the negative electrode current collector.

The negative electrode current collector is not particularly limited as long as it has a high conductivity without causing chemical changes in batteries. For example, copper, stainless steel, aluminum, nickel, titanium, baked carbon, copper or stainless steel that is surface-treated with one of carbon, nickel, titanium, silver, and the like, an aluminum-cadmium alloy, and the like may be used. In addition, the negative electrode current collector may typically have a thickness of 3 $\mu$m to 500 $\mu$m, and as in the case of the positive electrode current collector, fine irregularities may be formed on the surface of the negative electrode current collector to improve the adhesion of a negative electrode active material. For example, the negative electrode current collector may be used in various forms such as a film, a sheet, a foil, a net, a porous body, a foam body, and a non-woven fabric body.

A compound capable of reversibly intercalating and deintercalating lithium may be used as the negative electrode active material. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as $SiO_v$ (0<v<2), $SnO_2$, a vanadium oxide, and a lithium vanadium oxide; or a composite including the metallic compound and the carbonaceous material such as an Si-C composite or an Sn-C composite, and any one thereof or a mixture of two or more thereof may be used. In addition, as the negative electrode active material, a lithium metal thin film may be used. In addition, as a carbon material, low-crystalline carbon, high-crystalline carbon, and the like may all be used. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

In addition, the binder and the conductive material may be the same as described above for the positive electrode.

Meanwhile, in the secondary battery, a separator is to separate the negative electrode and the positive electrode and to provide a movement path for lithium ions. Any separator may be used without particular limitation as long as it is typically used as a separator in a secondary battery. Particularly, a separator having high moisture-retention ability for an electrolyte as well as low resistance to the movement of electrolyte ions is preferable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, a coated separator including a ceramic component or a polymer material may be used to secure heat resistance or mechanical strength, and a separator having a single-layer structure or a multi-layer structure may be optionally used.

Meanwhile, the electrolyte may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as Ra-CN (where Ra is a linear, branched, or cyclic C2 to C20 hydrocarbon group and may include a double-bond, an aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable. In this case, performance of the electrolyte may be excellent when the cyclic carbonate and the chain carbonate are mixed in a volume ratio of about 1:1 to about 1:9.

The lithium salt may be used without particular limitation as long as it is a compound capable of providing lithium ions used in lithium secondary batteries. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, or the like may be used. The lithium salt may be used in a concentration range of 0.1 M to 2.0 M. When the concentration of the lithium salt is in the above range, the electrolyte has suitable conductivity and viscosity, thereby exhibiting excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. In this case, the additive may be included in an amount of 0.1 wt% to 5 wt% with respect to a total weight of the electrolyte.

A secondary battery including the positive electrode active material according to the present invention as described above has excellent capacity properties and high temperature stability, and may thus be usefully applied to portable devices such as a mobile phone, a laptop computer, and a digital camera, and in electric cars such as a hybrid electric vehicle (HEV).

In addition, the secondary battery according to the present invention may be used as a unit cell of a battery module, and the battery module may be applied to a battery pack. The battery module or the battery pack may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

## Example

Hereinafter, examples of the present invention will be described in detail in such a manner that it may easily be performed by a person skilled in the art to which the present invention pertains. The present invention may, however, be embodied in many different forms, and is not limited to Examples set forth herein.

### Example 1

(1) Preparation of transition metal hydroxide

$NiSO_4$ and $MnSO_4$ were mixed in deionized water at a molar ratio of Ni:Mn of 35:65 to prepare a 2.4 M transition metal aqueous solution.

2.6 L of deionized water and 3.5 ml of NaOH aqueous solution with a concentration of 25 wt% were added into a 10 L continuous stirred tank reactor and stirred at 150 rpm at a constant temperature 50 °C to set the pH in the reactor to 12, and nitrogen gas was supplied at 2 L/min to remove dissolved oxygen and form a non-oxidizing atmosphere inside the reactor.

Thereafter, nitrogen and air were introduced into the reactor at a volume ratio of 90:10 under stirring at 1000 rpm to form a weak oxygen atmosphere, and the transition metal aqueous solution was continuously introduced into the reactor at 0.85 L/hr. In this case, a NaOH aqueous solution was introduced into the reactor along with the transition metal aqueous solution so that the pH in the reactor reached 10 in 2 hours, to initiate a coprecipitation reaction and then the coprecipitation reaction was continued for 50 hours at a constant pH of 10. After the coprecipitation reaction was completed, the obtained transition metal hydroxide was separated, washed, and dried at 100 °C for 12 hours to prepare a transition metal hydroxide $[Mn_{0.65}Ni_{0.35}(OH)_2]$, which is a positive electrode active material precursor.

(2) Preparation of positive electrode active material

50 g of the prepared transition metal hydroxide was mixed with 31.1 g of LiOH using a mechanical homogenizer for 20 minutes, and heat treated at 900 °C for 10 hours to prepare a positive electrode active material $[0.63(LiMn_{0.57}Ni_{0.43}O_2)\cdot0.37(Li_2MnO_3)]$.

### Example 2

With respect to Example 1, a transition metal hydroxide $[Mn_{0.65}Ni_{0.35}(OH)_2]$ and a positive electrode active material $[0.63(LiMn_{0.57}Ni_{0.43}O_2)\text{-}0.37(Li_2MnO_3)]$ were prepared in the same manner as in Example 1, except that nitrogen and air were added at a volume ratio of 95:5 to form a weak oxygen atmosphere.

### Example 3

With respect to Example 1, a transition metal hydroxide $[Mn_{0.65}Ni_{0.35}(OH)_2]$ and a positive electrode active material $[0.63(LiMn_{0.57}Ni_{0.43}O_2)\cdot0.37(Li_2MnO_3)]$ were prepared in the same manner as in Example 1, except that nitrogen and air were added at a volume ratio of 99:1 to form a weak oxygen atmosphere.

### Comparative Example 1

(1) Preparation of transition metal hydroxide

$NiSO_4$ and $MnSO_4$ were mixed in deionized water at a molar ratio of Ni:Mn of 35:65 to prepare a 2.4 M transition metal aqueous solution.

2.6 L of deionized water and 3.5 ml of NaOH aqueous solution with a concentration of 25 wt% were added into a 10 L continuous stirred tank reactor and stirred at 150 rpm at a constant temperature 50 °C to set the pH in the reactor to 12, and nitrogen gas was supplied at 2 L/min to remove dissolved oxygen and form a non-oxidizing atmosphere inside the reactor.

Thereafter, the transition metal aqueous solution was continuously introduced into the reactor at 0.85 L/hr. In this case, a NaOH aqueous solution was introduced into the reactor along with the transition metal aqueous solution so that the pH in the reactor reached 10 in 2 hours, to initiate a coprecipitation reaction and then the coprecipitation reaction was continued for 50 hours at a constant pH of 10. After the coprecipitation reaction was completed, the obtained transition metal hydroxide was separated, washed, and dried at 100 °C for 12 hours to prepare a transition metal hydroxide [$Mn_{0.65}Ni_{0.35}(OH)_2$], which is a positive electrode active material precursor.

(2) Preparation of positive electrode active material

50 g of the prepared transition metal hydroxide was mixed with 31.1 g of LiOH using a mechanical homogenizer for 20 minutes, and heat treated at 900 °C for 10 hours to prepare a positive electrode active material [$0.63(LiMn_{0.57}Ni_{0.43}O_2)\cdot0.37(Li_2MnO_3)$].

**Comparative Example 2**

(1) Preparation of transition metal hydroxide

$NiSO_4$ and $MnSO_4$ were mixed in deionized water at a molar ratio of Ni:Mn of 35:65 to prepare a 2.4 M transition metal aqueous solution.

2.6 L of deionized water and 3.5 ml of NaOH aqueous solution with a concentration of 25 wt% were added into a 10 L continuous stirred tank reactor and stirred at 150 rpm at a constant temperature 50 °C to set the pH in the reactor to 12, and nitrogen gas was supplied at 2 L/min to remove dissolved oxygen and form a non-oxidizing atmosphere inside the reactor.

Thereafter, air was introduced into the reactor under stirring at 1000 rpm to form an oxygen atmosphere, and the transition metal aqueous solution was continuously introduced into the reactor at 0.85 L/hr. In this case, a NaOH aqueous solution was introduced into the reactor along with the transition metal aqueous solution so that the pH in the reactor reached 10 in 2 hours, to initiate a coprecipitation reaction and then the coprecipitation reaction was continued for 50 hours at a constant pH of 10. After the coprecipitation reaction was completed, the obtained transition metal hydroxide was separated, washed, and dried at 100 °C for 12 hours to prepare a transition metal hydroxide [$Mn_{0.65}Ni_{0.35}(OH)_2$], which is a positive electrode active material precursor.

(2) Preparation of positive electrode active material

50 g of the prepared transition metal hydroxide was mixed with 31.1 g of LiOH using a mechanical homogenizer for 20 minutes, and heat treated at 900 °C for 10 hours to prepare a positive electrode active material [$0.63(LiMn_{0.57}Ni_{0.43}O_2)\cdot0.37(Li_2MnO_3)$].

**Comparative Example 3**

With respect to Example 1, a transition metal hydroxide [$Mn_{0.65}Ni_{0.35}(OH)_2$] and a positive electrode active material [$0.63(LiMn_{0.57}Ni_{0.43}O_2)\cdot0.37(Li_2MnO_3)$] were prepared in the same manner as in Example 1, except that nitrogen and air were added at a volume ratio of 80:20 to form a weak oxygen atmosphere.

Experimental Example 1

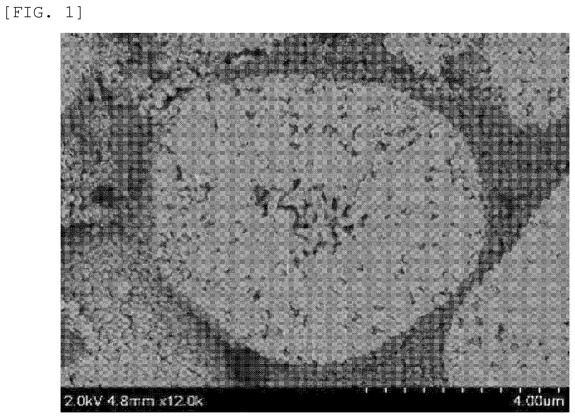

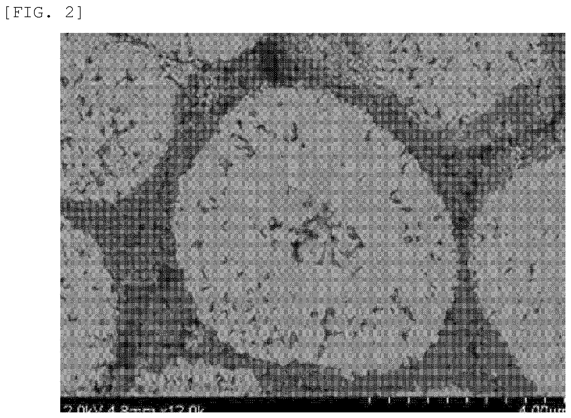

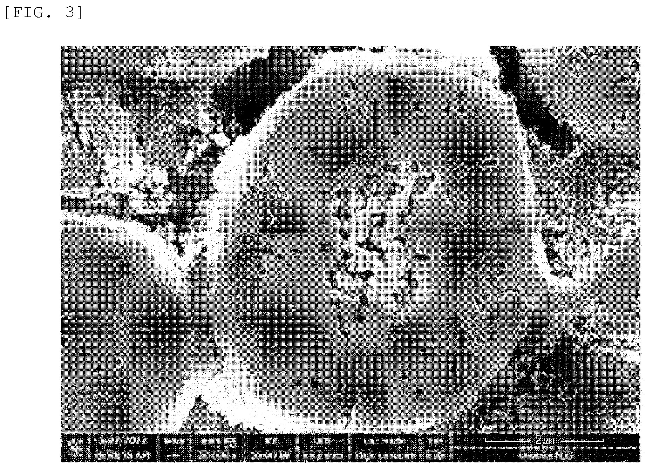

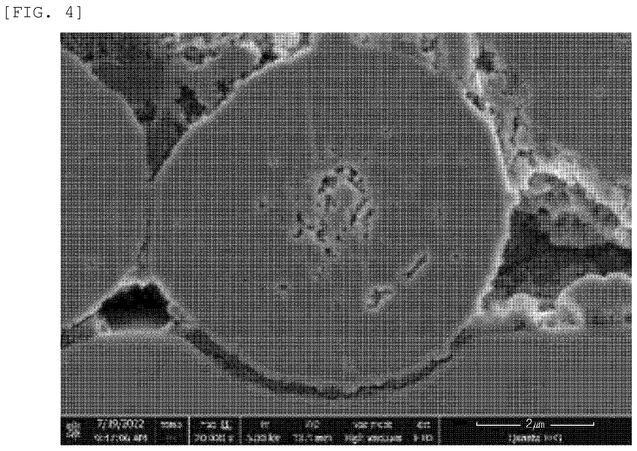

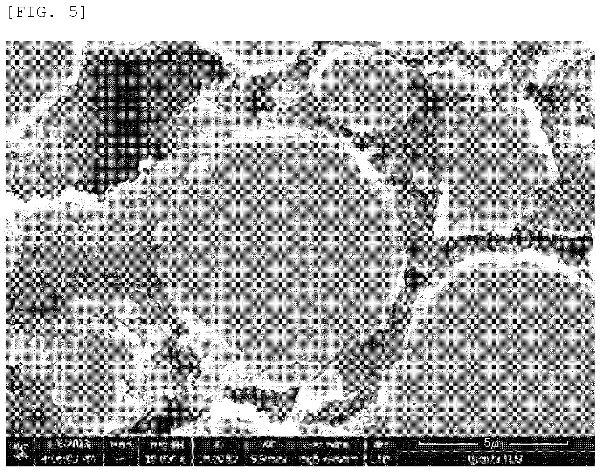

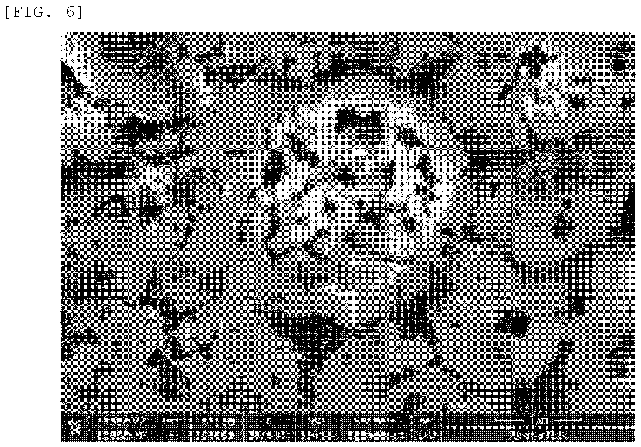

Surface portion porosity of each positive electrode active material prepared in Examples and Comparative Examples was analyzed, and the results are shown in FIGS. 1 to 6 and Table 1.

Pore shape on a cross-section of each positive electrode active material was observed using SEM (Quanta FEG 250, PHILIPS) in the following conditions.

High voltage: 10,000 kV
Chamber pressure: $9.0\times10^{-5}$ mbar
Gun pressure:$6.85\times10^{-10}$ mbar
Emission current: 165 $\mu$A
WD: 10 mm
Beam spot size: 3.0
Stage bias: 4000 V

In addition, the porosity of the surface portion was measured according to the schematic view shown in FIG. 7.

Specifically, particles on each cross-section were selected ((a) of FIG. 7) to get a particle outline and remove unnecessary background portions, and an inner portion and a surface portion were distinguished ((b) of FIG. 7) to measure surface portion porosity A using an image processing program, ImageJ. In this case, the inner portion on the cross-section is a region formed by connecting points at the 1/2 of the distance from a center on the cross-section of the positive electrode active material to an outermost surface on the cross-section of the positive electrode active material (see (b) of FIG. 7).

First, using ImageJ, an area ratio A1 occupied by the surface portion excluding pores with respect to the total area of the image and an area ratio A2 excluding surface portion pores with respect to the total area of the image were obtained ((c) and (d) of FIG. 7). Thereafter, the area ratio A2 excluding surface portion pores from the total area 100 was subtracted (100-A2) to obtain an area ratio $P_A$ of the pores in the surface portion. The area ratio A1 occupied by the surface portion and the area ratio $P_A$ of the pores in the surface portion were added to calculate an area ratio $S_A$ of the surface portion.

Thereafter, the surface portion porosity was calculated through Equation 1 below.

$$[Equation\ 1]$$

$$A(\%)=[P_A/S_A]\times100$$

In Equation 1 above,

$P_A$ indicates an area ratio of pores in a surface portion on a cross-section of the positive electrode active material,
$S_A$ is an area ratio of a surface portion on a cross-section of the positive electrode active material,
an inner portion of a cross-section of the positive electrode active material is a region formed by connecting points at the 1/2 of the distance from a center on the cross-section of the positive electrode active material to an outermost surface on the cross-section of the positive electrode active material, and
the surface portion on the cross-section of the positive electrode active material is a region excluding the inner portion.

In addition, using the SEM (Quanta FEG 250, PHILIPS), a cross-section of a positive electrode active material was obtained, 30 particles were selected from the cross section, and through the above-described process, an area ratio $P_{Ai}$ (where i is an integer of 1 to 30) of the pores in the surface portion and an area ratio $S_{Ai}$ (where i is an integer of 1 to 30) of the surface portion for each of the 30 particles were obtained, and the surface portion porosity $A_i$ (where i is an integer of 1 to 30) for the 30 particles was obtained through Equation 1 above, and then the average value thereof was provided as the surface portion porosity A' for each positive electrode active material as well(see Equation 2 below). In this case, Comparative Example 3 is shown for 20 particles.

$$[Equation\ 2]$$

$$\text{Surface portion porosity}(A') = \frac{1}{n}\sum_{i=1}^{n}\frac{100P_{Ai}}{S_{Ai}}$$

(where, n is an integer of 30)

[Table 1]

| Item | Example | | | Comparative Example | | |
|---|---|---|---|---|---|---|
| | 1 | 2 | 3 | 1 | 2 | 3 |
| Surface portion porosity(A) | 11.10 | 6.37 | 3.35 | 0.29 | <0.2 | 34.29 |

(continued)

| Item | Example | | | Comparative Example | | |
|---|---|---|---|---|---|---|
| | 1 | 2 | 3 | 1 | 2 | 3 |
| Surface portion porosity(A') | 11.45 | 7.54 | 4.05 | 0.44 | <0.2 | 25.48 |

FIGS. 1 to 6 show that the positive electrode active materials of Examples 1 to 3 had pores evenly distributed on the surface portion, and Table 1 shows that the positive electrode active materials of Examples 1 to 3 had a surface portion porosity of 1% to 30%. Meanwhile, it is determined that the positive electrode active materials of Comparative Examples 1 and 2 had a surface portion porosity of less than 1%. In addition, it is determined that Examples 1 to 3 had a standard deviation between the surface portion porosity A and the surface portion porosity A', which was the average value of 30 particles, of 2 or less, and thus had a uniform porosity with almost no deviation between the particles forming each positive electrode active material.

Meanwhile, Comparative Example 3 had a surface portion porosity of greater than 30%, thereby having severe particle breakage, and accordingly, preparing a positive electrode and evaluating battery characteristics, which will be described later, were not available. In addition, Comparative Example 3 had a surface portion porosity deviation of greater than 10 depending on particles when the surface portion porosity A' for 20 particles was calculated, indicating no consistency in the surface portion porosity for each particle.

**Experimental Example 2**

A positive electrode and a battery were manufactured using each positive electrode active material prepared in Examples and Comparative Examples, and then battery performance was evaluated.

(1) Manufacture of positive electrode

Each positive electrode active material prepared above, a carbon black conductive material, and a PVdF binder were mixed in an N-methylpyrrolidone solvent at a weight ratio of 92.5:3.0:4.5 to prepare a positive electrode material mixture (viscosity: 5000 mPa·s), and the mixture was applied onto one surface of an aluminum current collector, dried at 130 °C, and then roll-pressed to prepare a positive electrode.

(2) Manufacture of battery

Lithium metal was used as a negative electrode.
A porous polyethylene separator was interposed between the positive electrode prepared above and the negative electrode to prepare an electrode assembly, and the electrode assembly was placed inside a battery case. Thereafter, an electrolyte solution was injected into the case to manufacture a lithium secondary battery. In this case, lithium hexafluorophosphate ($LiPF_6$) at a concentration of 1.0 M was dissolved in an organic solvent formed of ethylene carbonate/ethylmethyl carbonate (mixing volume ratio of EC/EMC = 3/7) and 3 wt% of fluoroethylene carbonate (FEC) and 0.5 wt% of $LiBF_4$ were added as an additive to prepare the electrolyte solution.
Each lithium secondary battery half cell manufactured as above was charged up to 4.7 V at 0.1 C in CCCV mode at 25 °C and discharged up to 2.0 V at a constant current of 0.1 C to measure initial charge/discharge capacity. In addition, capacity retention was determined after charging at 0.1 C and discharging at 0.1 C were repeated 30 times. Results are shown in Table 2 below.
In addition, initial resistance and resistance increase rate were measured through changes in an amount of voltage when each half cell was discharged for initial 60 seconds of each cycle.

[Table 2]

| Item | Initial charge capacity (mAh/g) | Initial discharge capacity (mAh/g) | Capacity retention (%) | Initial resistance (Ω) | Resistance increase rate (%) |
|---|---|---|---|---|---|
| Example 1 | 214.3 | 198.6 | 98.4 | 41.3 | 119 |
| Example 2 | 214.0 | 197.2 | 98.3 | 44.0 | 117 |
| Example 3 | 210.3 | 194.8 | 98.5 | 42.2 | 113 |
| Comparative Example 1 | 200.5 | 179.8 | 97.2 | 47.7 | 127 |

(continued)

| Item | Initial charge capacity (mAh/g) | Initial discharge capacity (mAh/g) | Capacity retention (%) | Initial resistance ($\Omega$) | Resistance increase rate (%) |
|---|---|---|---|---|---|
| Comparative Example 2 | 189.4 | 171.5 | 96.6 | 48.0 | 171 |

As shown in Table 2, it is determined that Examples 1 to 3 are significantly superior to Comparative Examples 1 and 2 in terms of initial charge/discharge capacity and capacity retention, and Examples 1 to 3 show significantly improved initial resistance and resistance increase rate. Meanwhile, the positive electrode active material of Comparative Example 3 had an excessively high surface portion porosity and thus had a low particle density, and thus in the manufacture of an electrode, most of the particles were broken, and accordingly, manufacturing a battery was not available.

## Claims

1. A positive electrode active material represented by Formula 1 below and formed of polycrystal grains composed of secondary particles in which primary particles are aggregated,

   wherein a surface portion porosity A defined by Equation 1 below is 1% to 30%,

   [Formula 1] $\quad x[LiMn_pNi_{(1-p-q-r)}Co_qM^1{}_rO_2]\cdot(1-x)[Li_2Mn_sM^2{}_{(1-s)}O_3]$

   wherein in Formula 1 above,
   $M^1$ and $M^2$ are each independently one selected from Zr, Al, Re, V, Cr, Fe, Ga, Si, B, Ru, Ti, Nb, Mo, Mg, W, Na, and Pt, and
   $0.500 < x < 0.800$, $0.450 < p < 0.650$, $0 \leq q \leq 0.025$, $0 \leq r \leq 0.100$, and $0.900 \leq s \leq 1.000$ are satisfied,

   $$[Equation\ 1]$$

   $$A(\%) = [P_A / S_A] \times 100$$

   wherein in Equation 1 above,
   $P_A$ indicates an area ratio of pores in a surface portion on a cross-section of the positive electrode active material,
   $S_A$ is an area ratio of a surface portion on a cross-section of the positive electrode active material,
   an inner portion of a cross-section of the positive electrode active material is a region formed by connecting points at the 1/2 of the distance from a center on the cross-section of the positive electrode active material to an outermost surface on the cross-section of the positive electrode active material, and
   the surface portion on the cross-section of the positive electrode active material is a region excluding the inner portion.

2. The positive electrode active material of claim 1, wherein the surface portion porosity A is 2% to 20%.

3. The positive electrode active material of claim 1, wherein the positive electrode active material comprises no Co.

4. The positive electrode active material of claim 1, wherein the positive electrode active material is represented by Formula 1-1 below:

   [Formula 1-1] $\quad x[LiMn_pNi_{(1-p-r)}M^1{}_rO_2]\cdot(1-x)\ [Li_2Mn_sM^2{}_{(1-s)}O_3]$

   wherein in Formula 1-1 above,
   $M^1$ and $M^2$ are each independently one selected from Zr, Al, Re, V, Cr, Fe, Ga, Si, B, Ru, Ti, Nb, Mo, Mg, W, Na, and Pt, and
   $0.55 < x < 0.70$, $0.52 < p < 0.58$, $0 \leq r \leq 0.10$, and $0.90 \leq s \leq 1.00$ are satisfied.

5. The positive electrode active material of claim 1, wherein the positive electrode active material has an average particle diameter $D_{50}$ of 3 μm to 12 μm.

6. A method for preparing a positive electrode active material represented by Formula 1 below, the method comprising mixing and firing a transition metal hydroxide and a lithium raw material,
   wherein the transition metal hydroxide is prepared through the steps of:

   forming an inert atmosphere with a pH of 12 to 13 inside a reactor (S1);
   injecting nitrogen and air into the reactor at a volume ratio of 99.5:0.5 to 85.0:15.0 to form an active atmosphere, adding a transition metal solution containing Ni and Mn, and a basic solution, and subjecting the mixture to a coprecipitation reaction in a condition of a pH of 10 to 11 (S2),

   [Formula 1]     $x[LiMn_pNi_{(1-p-q-r)}Co_qM^2{}_rO_2] \cdot (1-x) [Li_2Mn_sM^1{}_{(1-s)}O_3]$

   wherein in Formula 1 above,
   $M^1$ and $M^2$ are each independently one selected from Zr, Al, Re, V, Cr, Fe, Ga, Si, B, Ru, Ti, Nb, Mo, Mg, W, Na, and Pt, and
   $0.500 < x < 0.800$, $0.450 < p < 0.650$, $0 \leq q \leq 0.025$, $0 \leq r \leq 0.100$, and $0.900 \leq s \leq 1.000$ are satisfied.

7. The method of claim 6, wherein the step (S1) is performed by adding and mixing a solvent and a basic solution into a reactor to form an atmosphere with a pH of 12 to 13, and then introducing an inert gas.

8. The method of claim 6, wherein in the step (S2), the coprecipitation reaction is performed by adding the basic solution so that the pH in the reactor reaches 10 to 11 within 1 to 2 hours after adding the transition metal solution into the reactor to initiate a reaction, and continuing the reaction for 20 to 50 hours while maintaining the pH of 10 to 11.

9. The method of claim 6, wherein the transition metal hydroxide comprises Mn in an amount of 50 mol% or greater in transition metals.

10. The method of claim 6, wherein the transition metal hydroxide comprises no Co.

11. The method of claim 6, wherein the transition metal hydroxide and the lithium raw material are mixed such that the transition metal hydroxide and an lithium element in the lithium raw material are present at a molar ratio of 1:1.2 to 1:1.6.

12. A positive electrode comprising:

   a current collector; and
   a positive electrode active material layer provided on at least one surface of the current collector,
   wherein the positive electrode active material layer comprises the positive electrode active material of claim 1.

13. A lithium secondary battery comprising:

   the positive electrode according to claim 12;
   a negative electrode;
   a separator interposed between the positive electrode and the negative electrode; and
   an electrolyte.

[FIG. 1]

[FIG. 2]

[FIG. 3]

[FIG. 4]

[FIG. 5]

[FIG. 6]

[FIG. 7a]

[FIG. 7b]

[FIG. 7c]

[FIG. 7d]

# EP 4 611 069 A1

## INTERNATIONAL SEARCH REPORT

| | International application No. |
|---|---|
| | **PCT/KR2024/001419** |

| **A.** | **CLASSIFICATION OF SUBJECT MATTER** |
|---|---|

**H01M 4/505**(2010.01)i; **H01M 4/525**(2010.01)i; **H01M 4/131**(2010.01)i; **H01M 10/052**(2010.01)i; **C01G 53/00**(2006.01)i; **H01M 4/02**(2006.01)i

According to International Patent Classification (IPC) or to both national classification and IPC

| **B.** | **FIELDS SEARCHED** |
|---|---|

Minimum documentation searched (classification system followed by classification symbols)

H01M 4/505(2010.01); H01M 10/052(2010.01); H01M 10/058(2010.01); H01M 4/131(2010.01); H01M 4/1391(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 (cathode), 표면 공극률 (surface porosity), 다결정 입자 (polycrystalline grain), 공침 (coprecipitation), 질소:공기 (nitrogen: air)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | KR 10-2017-0038485 A (LG CHEM, LTD.) 07 April 2017 (2017-04-07)<br>See abstract; paragraphs [0057]-[0058], [0060], [0116], [0194] and [0210]; and claim 1. | 1-13 |
| A | HONG, Y. J. et al. Electrochemical properties of 0.3Li2MnO3-0.7LiNi0.5Mn0.5O2 composite cathode powders prepared by large-scale spray pyrolysis. Materials Research Bulletin. 2012, vol. 47, pp. 2022-2026.<br>See entire document. | 1-13 |
| A | KR 10-2013-0088830 A (SUMITOMO CHEMICAL CO., LTD.) 08 August 2013 (2013-08-08)<br>See entire document. | 1-13 |
| A | KR 10-2013-0088669 A (KOREA ELECTRONICS TECHNOLOGY INSTITUTE) 08 August 2013 (2013-08-08)<br>See entire document. | 1-13 |
| A | JP 2011-187348 A (MURATA MFG CO., LTD.) 22 September 2011 (2011-09-22)<br>See entire document. | 1-13 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 May 2024** | **02 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/001419**

| Patent document cited in search report | | | Publication date (day/month/year) | Patent family member(s) | | | Publication date (day/month/year) |
|---|---|---|---|---|---|---|---|
| KR | 10-2017-0038485 | A | 07 April 2017 | CN | 107251282 | A | 13 October 2017 |
| | | | | CN | 107251282 | B | 12 March 2021 |
| | | | | EP | 3249723 | A1 | 29 November 2017 |
| | | | | EP | 3249723 | A4 | 02 May 2018 |
| | | | | EP | 3249723 | B1 | 05 December 2018 |
| | | | | JP | 2018-521456 | A | 02 August 2018 |
| | | | | JP | 6562576 | B2 | 21 August 2019 |
| | | | | KR | 10-1913897 | B1 | 28 December 2018 |
| | | | | PL | 3249723 | T3 | 30 September 2019 |
| | | | | US | 10862156 | B2 | 08 December 2020 |
| | | | | US | 2018-0048015 | A1 | 15 February 2018 |
| | | | | WO | 2017-057900 | A1 | 06 April 2017 |
| KR | 10-2013-0088830 | A | 08 August 2013 | CN | 102947226 | A | 27 February 2013 |
| | | | | CN | 102947226 | B | 01 April 2015 |
| | | | | JP | 2012-003948 | A | 05 January 2012 |
| | | | | JP | 5682151 | B2 | 11 March 2015 |
| | | | | KR | 10-1777897 | B1 | 12 September 2017 |
| | | | | US | 10103383 | B2 | 16 October 2018 |
| | | | | US | 2013-0130090 | A1 | 23 May 2013 |
| | | | | US | 2016-0240850 | A1 | 18 August 2016 |
| | | | | US | 9356288 | B2 | 31 May 2016 |
| | | | | WO | 2011-158889 | A1 | 22 December 2011 |
| KR | 10-2013-0088669 | A | 08 August 2013 | JP | 2015-511373 | A | 16 April 2015 |
| | | | | KR | 10-1332020 | B1 | 25 November 2013 |
| | | | | US | 2015-0004489 | A1 | 01 January 2015 |
| | | | | US | 9825291 | B2 | 21 November 2017 |
| | | | | WO | 2013-115451 | A1 | 08 August 2013 |
| JP | 2011-187348 | A | 22 September 2011 | JP | 5556252 | B2 | 23 July 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230011790

- CN 110112388 A